# EUROPÄISCHE PATENTSCHRIFT

(11) **EP 2 362 122 B1**
(45) Veröffentlichungstag und Bekanntmachung des Hinweises auf die Patenterteilung: **20.05.2015**
(21) Anmeldenummer: 11154306.2
(22) Anmeldetag: 14.02.2011
(51) Int. Cl.: F16J 15/34

(54) **Gleitringdichtung und Verfahren zur Optimierung von deren Betriebsverhalten**
Slip ring seal and method for optimising its operating performance
Bague d'étanchéité glissante et procédé d'optimisation de leur comportement en fonctionnement

(30) Priorität: 24.02.2010 DE 102010009194
(43) Veröffentlichungstag der Anmeldung: 31.08.2011
(60) Teilanmeldung: 12176491.4
(73) Patentinhaber: KSB Aktiengesellschaft, 67227 Frankenthal (DE)
(72) Erfinder: Seryczynski, Jakub, 67227, Frankenthal (DE); Bosbach, Franz, 67251, Freinsheim (DE); Brodersen, Sönke, Dr., 69198, Schriesheim (DE); Gontermann, Daniel, 67227, Frankenthal (DE); Krüger, Michael, 67281, Kirchheim an der Weinstraße (DE)

(56) Entgegenhaltungen:
- EP-A1- 0 405 083
- EP-A1- 1 079 156
- WO-A1-2008/089800
- DE-T2- 69 117 228
- US-A1- 2010 106 429

## Beschreibung

Die Erfindung betrifft eine Gleitringdichtung zur Bereitstellung einer fluidgeschmierten, insbesondere flüssigkeitsgeschmierten, Abdichtung zwischen einem Paar relativ verdrehbarer Bauteile, insbesondere zwischen einem stationären und einem rotierenden Bauteil, mit einem ersten Gleitring, der bezüglich eines der Bauteile axial feststehend und drehfest sowie abgedichtet befestigt ist, und einem zweiten Gleitring, der bezüglich des anderen Bauteils drehfest sowie abgedichtet befestigt ist, wobei der zweite Gleitring in Richtung auf den ersten Gleitring axial beweglich ist, so dass einander gegenüberliegende Flächen des ersten und zweiten Gleitringes derart zusammenwirken, dass zwischen diesen ein Dichtspalt ausgebildet ist, wobei in einem der Gleitringe mindestens ein Kanal vorgesehen ist, wobei sich der Kanal des Gleitringes an einem Punkt innerhalb des Dichtspalts öffnet, wobei der Kanal ein Schmierfluid, insbesondere eine Schmierflüssigkeit, führt, wobei das Schmierfluid über den Kanal dem Dichtspalt in Abhängigkeit von überwachten Betriebsbedingungen geliefert wird, um das Betriebsverhalten der Dichtung zu optimieren. Die Erfindung betrifft ferner ein Verfahren zur Optimierung des Betriebsverhaltens einer solchen Gleitringdichtung.

Bei einer Gleitringdichtung bilden wenigstens ein Paar von in abdichtender Weise zusammenwirkenden Gleitringen, wobei ein rotierender Gleitring mit einem drehbaren Bauteil und ein stationärer Gleitring mit einem stationären Bauteil verbunden ist, zwischen ihren Dichtflächen einen engen Dichtspalt aus, der in einem Normalbetrieb der Gleitringdichtung fluidgeschmiert ist. Bei einer Gleitringdichtung wird ein axial beweglicher Gleitring von einem Vorspannelement, beispielsweise einem Federelement, an einen axial feststehenden Gleitring gepresst. Bei Gleitringdichtungen finden sowohl rotierende als auch stationäre, axial bewegliche und axial feststehende Gleitringe Verwendung. Die Schließkraft, die die Gleitringe zum abdichtenden Zusammenwirken bringt, wird üblicherweise durch das auf den axial beweglichen Gleitring wirkende Vorspannelement und einer hydraulischen Belastung durch das Fluid, gegen das abgedichtet wird, erzeugt. Letztere ist vom Fluiddruck und damit von den Betriebsbedingungen der Gleitringdichtung abhängig.

Trockenlauf ist eine der wesentlichen Ausfallursachen für Gleitringdichtungen, insbesondere bei Gleitringdichtungen für Kreiselpumpen. Durch Temperaturanstieg an den Gleitflächen wird die Verdampfungstemperatur des Schmierfluids überschritten, was zu einer Vergasung des Schmierfilmes und lokalem Trockenlauf führt. Infolge eines erhöhten Verschleißes und der entstehenden Reibungswärme versagt die Dichtung thermisch. Dies kann zu einem Zerbrechen der Gleitringe führen. Neben dem Verlust der Dichtwirkung ist auch ein mögliches Einspülen von Splittern in das Fluid, gegen das abgedichtet wird, schädlich. Eine oft eingesetzte Gegenmaßnahme ist die Kühlung des Dichtungsraumes. Die Installation eines Kühlsystems ist aufwendig und solche Systeme sind für den ungünstigsten Betriebspunkt auszulegen, für den Normalbetrieb also überdimensioniert. Doppeltwirkende Gleitringdichtungen mit speziellen Kühl-, Sperr- und Schmierfluiden haben vergleichbare Nachteile.

Durch die DE 691 17 228 T2 ist eine gattungsgemäße Gleitringdichtung bekannt. Diese Gleitringdichtung dient der Abdichtung einer Kreiselpumpe an der Durchführung von deren rotierenden Pumpenwelle aus deren ein Förderfluid führenden Pumpengehäuse. In einem als stationärer Sitz- oder Gegenring ausgebildeten ersten, axial feststehenden Gleitring ist ein Kanal für ein unter Druck stehendes Fluid vorgesehen, der sich an der Dichtfläche des Gleitringes an einem Punkt öffnet, der zwischen dem radial äußersten und dem radial innersten Ende der Fläche liegt, die mit der Dichtfläche des anderen Gleitringes zusammenwirkt. Atmosphärenseitig ist der Kanal an eine externe Quelle unter Druck stehenden Fluids angeschlossen. Als externe Quelle wird ein Fluidreservoir in Kombination mit einer durch ein elektropneumatisches Regelventil beeinflussbare externe Membranpumpe verwendet. Durch eine Messvorrichtung zur Überwachung von Betriebsbedingungen und ein außerhalb der Gleitringdichtung angeordnetes Fluidregelventil zur Einstellung des Drucks des an die Dichtfläche zu liefernden Fluids soll das Betriebsverhalten der Dichtung optimiert werden. Diese Gleitringdichtungsanordnung ist nur unter großem Montageaufwand austauschbar. Des Weiteren ist ein externes Fluidreservoir erforderlich, um im Anfahrvorgang eine ausreichende Schmierung der Dichtflächen zu erzielen.

Aus der EP 0 405 083 A1 ist eine als Gleitringdichtung ausgebildete Endquerdichtung einer durchbiegungssteuerbaren Walze mit feststehendem Querhaupt und umlaufender Hohlwalze bekannt, die in der Gleitfläche des Gleitrings eine Kammer zur hydraulischen Entlastung aufweist. Radial außerhalb der Kammer ist eine umlaufende Nut vorgesehen, die über einen Kanal mit der Niederdruckseite in Verbindung steht, um die an der Gleitfläche von der Druckseite her radial von außen eingedrungenen Flüssigkeitsmengen sogleich zur Niederdruckseite abzuleiten.

Die EP 1 079 156 A1 offenbart eine berührungsfreie mechanische Dichtung zum Erzeugen einer im Wesentlichen flüssigkeitsdichten Dichtung um eine Drehwelle, mit einem ersten ortsfesten Dichtungsring und einem zweiten sich drehenden Dichtungsring sowie Mittel zum Einlassen einer Dichtflüssigkeit zwischen die Dichtflächen der beiden Dichtungsringen. Um den zweiten Dichtungsring ist ein mit der Drehwelle verbundenes Muffenelement angeordnet. Zwischen dem Muffenelement und dem zweiten Dichtungsring sind zwei axial beabstandete elastische Dichtungsringelemente vorgesehen, wobei die Dichtungsringelemente einen ringförmigen Raum zwischen dem Muffenelement und dem zweiten Dichtungsring definieren, während Widerlagemittel auf dem zweiten Dichtungsring angeordnet, mit jedem der elastischen Dichtungsringelemente verbunden und angepasst sind, um eine axiale Bewegung der elastischen Dichtungselemente voneinander weg in Bezug auf den zweiten Dichtungsring zu verhindern. Ferner sind Mittel zum Einlassen einer unter Druck gesetzten Dichtflüssigkeit in den ringförmigen Raum zum axialen Komprimieren der elastischen Dichtungsringelemente vorgesehen, wodurch sich die Dichtungsringelemente radial ausdehnen und der zweite Dichtungsring fest innerhalb des Muffenelements gehalten wird, um im Wesentlichen ein pneumatisches Hämmern des zweiten Dichtungsrings zu reduzieren.

Der Erfindung liegt die Aufgabe zu Grunde, eine Gleitringdichtung zu entwickeln, die bei einfacher Austauschbarkeit in Abhängigkeit von deren Betriebsbedingungen möglichst optimal betrieben wird.

Die Aufgabe wird erfindungsgemäß dadurch gelöst, dass in die Gleitringdichtung eine als Mikropumpe ausgebildete Fördereinrichtung zur Förderung des Schmierfluids integriert ist, wobei eine Ausgangsseite oder Druckseite der Fördereinrichtung mit dem zum Dichtspalt führenden Kanal verbunden ist und eine Eingangsseite oder Saugseite der Fördereinrichtung über einen weiteren Kanal mit einem fluidgefüllten Raum verbunden ist. Die Fördereinrichtung fördert über den ausgangsseitigen, zum Dichtspalt führenden Kanal Schmierfluid in den Dichtspalt und verhindert ein Zusammenbrechen eines hydrodynamischen Schmierfilms im Dichtspalt. Die Gleitringdichtung ist nicht mit einer externen Druckquelle und den dazu notwendigen Fluidanschlüssen zu verbinden, sondern wird als ein komplettes Bauteil ausgetauscht. Gegebenenfalls erfolgt noch ein Anschluss zur elektrischen Versorgung der Gleitringdichtung oder der darin befindlichen Fördereinrichtung. Weiterer Vorteil ist der geringe Platzbedarf einer solchen Gleitringdichtung. Die Eingangsseite der Fördereinrichtung kann mit einem in der Gleitringdichtung vorgesehenen Fluidreservoir oder mit einem anderen, innerhalb der Anordnung vorhandenen fluidgefüllten Raum verbunden sein. Dabei kann in der Gleitringdichtung ein Vorlagebehälter vorgesehen sein. Bei einer Kreiselpumpe kann die Eingangsseite der Fördereinrichtung mit der Druckseite der Kreiselpumpe verbunden sein. Als Schmierfluid wird dabei zweckmäßigerweise das Förderfluid verwendet. Die Gleitringdichtung oder der Gleitring kann darüber hinaus einen Filter zur Filterung des Förderfluids aufweisen. Das gefilterte Förderfluid wird dann als Schmierfluid verwendet.

Mikropumpen sind Komponenten eines mikrofluidischen Systems mit Kanaldurchmessern im zwei- bis dreistelligen Mikrometerbereich. Diese Mikropumpen weisen eine geringe Baugröße auf. Als Antriebe von Mikropumpen finden Mikroaktuatoren Verwendung, die bei Anregung die Förderung eines in einer Pumpenkammer der Mikropumpe befindlichen Schmierfluids bewirken. Erfindungsgemäß wurde erkannt, dass die geringen Leckageraten einer Gleitringdichtung, die nach der Einlaufzeit einer Gleitringdichtung typischerweise zwischen 0,1 ml / h und 1 ml / h liegen, in vorteilhafter Weise durch eine Mikropumpe geliefert werden können, um in einem ungünstigen Betriebszustand den zum Aufbau eines hydrodynamischen Schmierfilms notwendigen Leckagestrom zu unterstützen. Die Fördereinrichtung ist dazu temporär aktivierbar oder zuschaltbar gestaltet.

Eine vorteilhafte Ausgestaltung der Erfindung sieht vor, dass in einen der Gleitringe eine miniaturisierte Fördereinrichtung, insbesondere eine mikrotechnische oder mikromechanische Fördereinrichtung, integriert ist. Eine mikromechanische Fördereinrichtung ist aus mikromechanischen Elementen aufgebaut. Die Abmessungen hinsichtlich mindestens einer Dimension der kleinsten funktionsrelevanten mikromechanischen Elemente liegt dabei im Bereich von 1 µm bis zu 1000 µm. Damit liegen die Abmessungen einer in Umfangsrichtung lokal angeordneten Fördereinrichtung im Bereich von einigen wenigen Millimetern. Die Abmessungen der Fördereinrichtung betragen idealerweise zwischen 1 mm und 30 mm, vorzugsweise zwischen 1 mm und 10 mm. Durch eine Integration einer solchen miniaturisierten Fördereinrichtung in einen Gleitring wird weiterer Bauraum eingespart. Des Weiteren erfolgt die Druckerzeugung in unmittelbarer Nähe des Dichtspaltes. Bei einer Kreiselpumpe ist die Eingangsseite der Fördereinrichtung über den in dem Gleitring angeordneten weiteren Kanal in einfacher Weise mit einer fluidgefüllten Druckseite der Kreiselpumpe oder der Gleitringdichtung verbindbar. In einer erfindungsgemäßen Variante besitzt die mikrotechnische oder mikromechanische Fördereinrichtung eine Pumpenkammer, einen Aktuator und Ventile. Die Fördereinrichtung kann ringförmig gestaltet sein.

Es hat sich als zweckmäßig erwiesen, die Fördereinrichtung und die Kanäle in einem stationären Gleitring anzuordnen. Insbesondere ist die Fördereinrichtung in einen stationären axial feststehenden Gleitring integriert. Vorteilhafterweise ist die Fördereinrichtung auf einer Niederdruckseite des stationären Gleitringes, insbesondere des stationären axial feststehenden Gleitrings, angeordnet. Somit können Anschlussleitungen zur Versorgung der Fördereinrichtung auf einer trockenen Seite der Gleitringdichtung verlegt sein.

Als Miniatur- oder Mikropumpe ist vorzugsweise eine Membranpumpe, eine peristaltische Pumpe oder eine Zahnradpumpe vorgesehen. Bei einer Zahnradpumpe lässt ein antreibender Motor ein Zahnradpaar rotieren. Deren Pumpengehäuse selbst ist dabei gerade so groß, dass das Zahnradpaar ohne nennenswerte Reibung darin rotieren kann. Durch die Bewegung der Zahnräder wird eingangsseitig ein Unterdruck erzeugt, wodurch das Fluid in das Zahnradpumpengehäuse strömt. Das Fluid wird während der Rotation in den Zahnlücken der Zahnräder transportiert. Am Pumpenausgang wird durch das Ineinandergreifen der Zähne ein Überdruck erzeugt, das Fluid wird aus dem Zahnradpumpengehäuse und über den Kanal in den Dichtspalt gedrängt. Bei einer Mikromembranpumpe verdrängt eine aktuatorbetriebene Membran das Fluid aus einer Pumpenkammer. Ein eingangs- und ein ausgangsseitiges Rückschlagventil bestimmen üblicherweise die Förderrichtung.

Die Fördereinrichtung weist gemäß einer Ausgestaltung ein piezoelektrisches, pneumatisches oder elektromagnetisches Wirkprinzip auf. Ihrem Wirkprinzip entsprechend weist die Fördereinrichtung einen piezoelektrischen, pneumatischen oder elektromagnetischen Aktuator auf. Weitere Wirkprinzipien der Fördereinrichtung sind etwa ein thermopneumatisches, elektrisches, elektrostatisches, thermisches, akustisches oder optisches Wirkprinzip. Es ist insbesondere ein thermisches Wirkprinzip vorgesehen, bei dem eine Wärmedehnung des Aktuators und/oder des direkt in der Pumpenkammer befindlichen Fluids genutzt wird, um bei Erhitzung der Gleitringdichtung das schmierende Fluid aus der Pumpenkammer in den Dichtspalt zwischen den Gleitringen zu führen. Hierzu kann in der Fördereinrichtung ein Kühl- bzw. Heizelement angeordnet werden, so dass die Wärmedehnung des Aktuators bzw. des Schmierfluids durch Kühlung oder Heizung beeinflusst werden kann. Vergleichbare Wirkprinzipien wie ein elektroosmotisches Wirkprinzip oder ein Wirkprinzip auf Basis von Bimetallen, Formgedächtnislegierungen oder elektroaktiven Polymeren sind ebenfalls vorgesehen.

Als in die Gleitringdichtung integrierte Fördereinrichtung hat sich eine piezoelektrische Membranpumpe und deren Anordnung im stationären Gleitring bewährt. Diese Mikropumpe besteht aus einer Ventileinheit mit zwei Rückschlagventilen und einer periodisch ausgelenkten Pumpenmembran. Den Antrieb der Mikropumpe bildet ein beispielsweise als Piezokeramik ausgebildeter Mikroaktuator, der sich nach Anlegen einer elektrischen Spannung in eine Vorzugsrichtung verformt. Der Piezoaktuator ist auf einer Membran, beispielsweise aus Silizium oder Stahl, aufgebracht und überträgt seine Formänderung direkt auf diese. Der Aktuator ist über eine elektrische Anschlussleitung mit einer Steuereinrichtung, die den Aktuator ansteuert, verbunden. Auf der Rückseite der Membran befindet sich in einer Pumpenkammer das zu pumpende Schmierfluid. Die Pumpenkammer besitzt vorzugsweise einen Durchmesser von 5 bis 10 mm. Die Pumprate liegt zweckmäßigerweise im Bereich von 1 µl bis 10 ml pro Minute und wird mittels der Aktuatorfrequenz und/oder der angelegten Spannung eingestellt. Eine piezoelektrische Membranpumpe bietet ein gutes Verhältnis von Baugröße zu ausgangsseitig erzeugbarem Druck. Aufgrund des geringen Energieverbrauchs der piezoelektrischen Membranpumpe kann die ansteuernde Steuereinrichtung batteriebetrieben ausgeführt sein.

Innerhalb der Gleitringdichtung können auch mehrere Fördereinrichtungen angeordnet sein. Idealerweise sind diese entlang des Umfangs des stationären Gleitringes, insbesondere des axial feststehenden Gleitringes, vorzugsweise gleichmäßig beabstandet angeordnet. Durch eine zeitlich versetzte Ansteuerung der Fördereinrichtungen wird der prinzipbedingt pulsierende Fluidstrom in Summe geglättet. Ebenso können innerhalb der Gleitringdichtung, insbesondere entlang des Umfanges des stationären Gleitringes, insbesondere des axial feststehenden Gleitringes, mehrere Kanäle, die vorzugsweise in Umfangsrichtung gleichmäßig beabstandet in den Dichtspalt münden, vorgesehen sein. Dadurch ist eine gleichmäßige Druckeinleitung in den Dichtspalt gewährleistet. Im Rahmen der Erfindung liegt auch ein poröser Gleitring. Damit ist eine über den Dichtspalt gleichmäßige Zufuhr des Schmierfluids gewährleistet.

Nach einer weiteren Ausgestaltung der Erfindung sind in oder an der Gleitringdichtung, vorzugsweise in oder nahe dem Dichtspalt, ein oder mehrere Sensoren angeordnet, die entsprechend der Betriebsbedingungen der Gleitringdichtung Betriebsparameter der Gleitringdichtung oder deren Umgebung erfassen. Geeignet sind dabei der Druck des abzudichtenden Fluids, dessen Temperatur, die Temperatur in oder nahe dem Dichtspalt, die Drehzahl des drehenden Bauteils und/oder Vibrationen, die aus dem Betrieb des abzudichtenden Aggregats oder ungünstigen Betriebszuständen der Gleitringdichtung resultieren.

Eine mit den Sensoren verbundene Steuereinrichtung ermittelt mit deren Signalen einen aktuellen Betriebszustand der Gleitringdichtung und leitet in Abhängigkeit dieses Betriebszustands eine Reaktion ein. Die Steuereinrichtung steuert und/oder regelt dabei die Fördereinrichtung. Die Betriebsbedingungen der Gleitringdichtung werden durch mindestens einen Sensor erfasst und durch die Steuereinrichtung ermittelt. Erfindungsgemäß werden in der Steuereinrichtung die aus den Sensorsignalen ableitbaren Zusammenhänge genutzt, um bei Bedarf den Schmierzustand im Dichtspalt gezielt zu verbessern. Die Verbindung mit den Sensoren kann leitungsgebunden oder leitungsungebunden, also beispielsweise per Funk, ausgeführt sein. Günstig ist es, wenn die Steuereinrichtung am Gleitringdichtungsgehäuse oder an einem Kreiselpumpengehäuse angeordnet ist. Die Steuereinrichtung kann Bedien- und Anzeigemittel sowie, beispielsweise optische oder akustische, Meldemittel aufweisen. Dadurch ist eine an der Gleitringdichtung angeordnete Zustandsanzeige sowie eine einfache Montage oder Nachrüstung ermöglicht. Die Steuereinrichtung kann batteriebetrieben sein. Die Steuereinrichtung kann als eine miniaturisierte oder mikrotechnische Steuereinrichtung ebenfalls in einen Gleitring, insbesondere in einen stationären Gleitring, integriert sein.

Nach einer weiteren Ausgestaltung bilden Sensoren und Aktuatoren eine bauliche Einheit, insbesondere sind sie identisch. Eine solche adaptronische Fördereinrichtung reagiert zweckmäßigerweise selbstständig auf veränderliche Umgebungsbedingungen. Ebenfalls vorgesehen ist es, dass Sensor und Aktuator gleich aufgebaut sind und nahe beieinander angeordnet sind. Beispielsweise ist vorgesehen, dass Piezoelemente bei einer Anordnung in der Nähe der Dichtfläche oder des Dichtspalts ein Reibmoment erfassen und als Reaktion von der Steuereinrichtung zur Expansion angeregt werden, um den Schmierzustand der Dichtfläche durch Zuleitung des in der Pumpenkammer befindlichen Fluids zu verbessern. Von besonderem Vorteil ist es dabei, wenn die Steuereinrichtung in den Gleitring, insbesondere in den stationären Gleitring, integriert ist.

Die Energie zur Versorgung der Sensoren, der Steuereinrichtung und der Fördereinrichtung kann je nach deren Wirkprinzip durch elektrischen Strom, Druckluft oder Hydraulik mittels einer entsprechenden Energieleitung von außen zugeführt werden.

Um die Fördereinrichtung oder die Fördereinrichtungen und/oder die Sensoren elektrisch zu versorgen, sind nach einer alternativen Ausgestaltung innerhalb der Gleitringdichtung Mittel zur Wandlung von Energie aus der Umgebung in elektrische Energie vorgesehen. Ebenfalls ist eine leitungsungebundene, also eine kabel- oder drahtlose Übertragung der von den Sensoren erfassten Messgrößensignale vorgesehen.

Innerhalb der Gleitringdichtung sind insbesondere thermo-, dynamo- oder piezoelelektrische Komponenten zur Energiewandlung von thermischer Energie, Rotations- oder Vibrationsenergie in elektrische Energie vorgesehen. Besonders zweckmäßig sind dabei im stationären Gleitring, insbesondere im axial feststehenden Gleitring, vorzugsweise nahe der Dichtfläche angeordnete Thermogeneratoren. Diese können beispielsweise zwischen Gleitring und einem Widerlager oder einem umgebenden Fluid bestehende Temperaturdifferenzen in elektrische Energie wandeln. Ebenso kann die rotierende Welle lokal magnetisiert oder mit magnetischen Elementen bestückt werden, um die zur Versorgung des Systems benötigte Energie aus dem rotierenden Magnetfeld zu entnehmen.

Mit der so innerhalb der Gleitringdichtung verfügbaren elektrischen Energie können ein oder mehrere Fördereinrichtungen, ein oder mehrere Sensoren und/oder gegebenenfalls die Steuereinrichtung versorgt werden.

Die Verwendung der erfindungsgemäßen Gleitringdichtung ist bei allen Anwendungen vorgesehen, bei denen ein rotierendes Bauteil gegenüber einem anderen Bauteil abzudichten ist. Besonders bewährt hat sich die Verwendung einer solchen Gleitringdichtung als Wellenabdichtung einer Strömungsmaschine, insbesondere einer Kreiselpumpe.

Bei einem erfindungsgemäßen Verfahren zum Betrieb einer erfindungsgemäßen Gleitringdichtung, insbesondere zur Optimierung von deren Betriebsverhalten, ist vorgesehen, dass ein oder mehrere in einer Umgebung der Gleitringdichtung, vorzugsweise in oder nahe dem Dichtspalt, angeordnete Sensoren Betriebsparameter der Gleitringdichtung erfassen. Geeignete Messgrößen bei einer an einer Kreiselpumpe angeordneten Gleitringdichtung sind die Fördermenge der Kreiselpumpe, ein Förderfluiddruck, eine Förderfluidtemperatur, die Temperatur nahe dem oder im Dichtspalt, die Drehzahl der Antriebswelle sowie Vibrationen der Anordnung. Weiterhin können ein Reibmoment am Dichtspalt und/oder eine Gleitringdichtungsleckage erfasst werden.

Die erfindungsgemäße Steuereinrichtung kann mit den Sensorsignalen den Betriebszustand der Gleitringdichtung ermitteln und in Abhängigkeit des Betriebszustands der Gleitringdichtung eine Reaktion einleiten. Dabei werden insbesondere ein oder mehrere Fördereinrichtungen gesteuert und/oder geregelt. Ebenso kann die Steuereinrichtung bei unzulässigen oder ungünstigen Betriebszuständen eine Meldung oder einen Alarm ausgeben. Durch das Verfahren wird es ermöglicht, bei für die Gleitringdichtung als ungünstig erachteten Betriebszuständen deren Dichtfläche zeitlich begrenzt aktiv zu schmieren und einen normalerweise vorhandenen Leckagestrom der Gleitringdichtung zu unterstützen.

Es ist zusätzlich vorgesehen, dass die Steuereinrichtung voreingestellte und gespeicherte Algorithmen, insbesondere für einen Anfahrvorgang, verwendet. Die Steuereinrichtung kann lernfähig ausgebildet sein und lernend das Betriebsverhalten der Gleitringdichtung optimieren und/oder beeinflussen. Dabei werden eingeleitete Reaktionen der Steuereinrichtung auf erlernte und prognostizierbare Betriebszustände angepasst. Beispielsweise wird bei einem erlernten, zur Überhitzung führenden Betriebszustand, der Dichtspalt bereits vorab mit Schmierfluid beaufschlagt bevor eine Überhitzung auftritt.

Ausführungsbeispiele der Erfindung sind in den Zeichnungen dargestellt und werden im Folgenden näher beschrieben. Es zeigen die
- Fig. 1: eine erfindungsgemäße Gleitringdichtung als Wellendichtung einer Kreiselpumpe, die
- Fig. 2: eine Gleitringdichtung mit einer mikromechanischen Membranpumpe als Fördereinrichtung und die
- Fig. 3: eine Detailansicht einer mikromechanischen Membranpumpe.

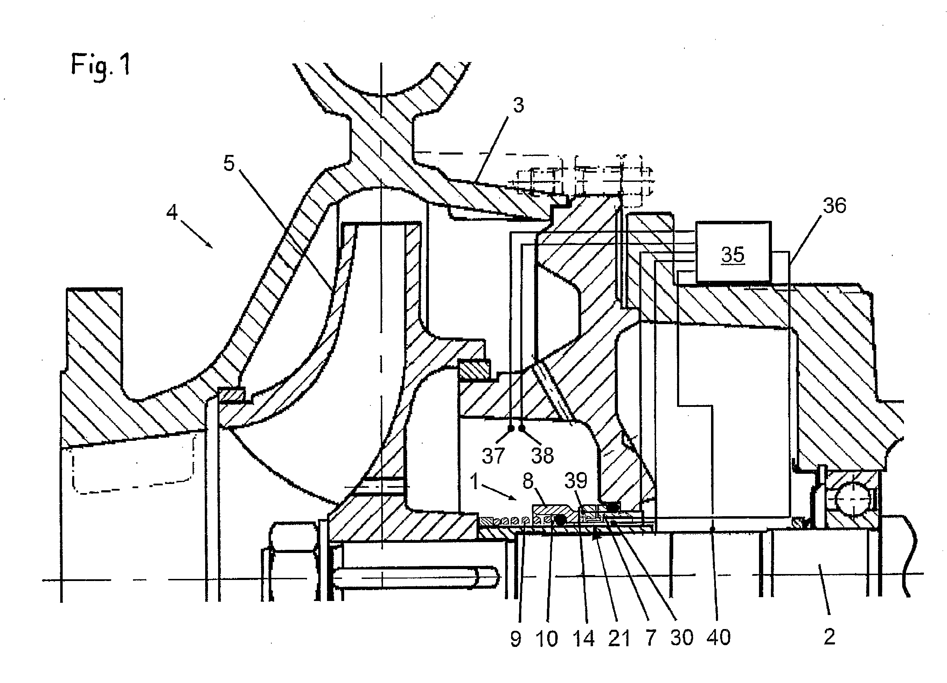

Die Figur 1 zeigt eine erfindungsgemäße Gleitringdichtung 1 am Beispiel einer Kreiselpumpe 4 mit einer rotierenden Welle 2, einem Laufrad 5 und einem feststehenden Gehäuse 3. Die Gleitringdichtung 1 besitzt einen ersten, axial feststehenden Gleitring 7 und einen zweiten, axial beweglichen Gleitring 8. Der axial bewegliche Gleitring 8 ist mittels eines Vorspannelementes 9, hier eine Druckfeder, und über einen Druckring 10 in Richtung auf den ersten Gleitring 7 gedrückt, so dass einander gegenüberliegende Flächen des ersten und zweiten Gleitrings 7, 8 abdichtend zusammenwirken und zwischen sich einen Dichtspalt 14 ausbilden. Der erste Gleitring 7 ist stationär im Gehäuse 3 angeordnet. Der befederte Gleitring 8 ist drehfest mit der Welle 2 der Kreiselpumpe 4 verbunden.

Erfindungsgemäß weist die Gleitringdichtung 1 eine Fördereinrichtung 21 zur Förderung eines Schmierfluids auf. Die Fördereinrichtung 21 ist in dem Gleitring 7 angeordnet. Die Fördereinrichtung 21 fördert über einen ausgangsseitigen Kanal Schmierfluid in den Dichtspalt 14, wodurch ein hydrodynamischer Schmierfilm im Dichtspalt 14 unterstützt wird. Durch die Integration der Fördereinrichtung 21 in die Gleitringdichtung 1 ist diese bei einer Wartung in einfacher Art und Weise komplett austauschbar.

Eine Steuereinrichtung 35 ist mittels mehrerer Signalleitungen mit Sensoren 30, 37, 38, 39, 40 verbunden, die Betriebsparameter der Gleitringdichtung 1 erfassen. Dazu sind die Sensoren 30, 37, 38, 39, 40 in oder an der Gleitringdichtung 1 angeordnet. Ein Sensor 37 erfasst einen Förderfluiddruck, ein Sensor 38 eine Förderfluidtemperatur, ein Sensor 39 die Temperatur nahe dem Dichtspalt und ein Sensor 40 die Drehzahl der Antriebswelle 2 und/oder Vibrationen der Gleitringdichtungsanordnung. Weiterhin ist ein Sensor 30 zur Erfassung einer Gleitringdichtungsleckage vorgesehen. Zusätzlich oder alternativ kann auf einer Saug- und/oder Druckseite der Kreiselpumpe 4 ein Sensor den Saug- und/oder Enddruck der Kreiselpumpe 4 messen. Die Steuereinrichtung 35 ist über eine Leitung 36 mit der Fördereinrichtung 21 verbunden. Die Steuereinrichtung 35 kann gut zugänglich am Pumpengehäuse 3 oder zugehörigen Teilen, beispielsweise in einem separaten Gehäuse, angeordnet sein. Ebenso gut kann die Steuereinrichtung 35 in das Pumpengehäuse 3, das Pumpenaggregat oder eine Antriebseinheit integriert sein. Die Steuereinrichtung 35 besitzt - hier nicht dargestellte - Bedien-, Anzeige- sowie Meldemittel, die einer Zustandsanzeige an der Gleitringdichtung 1 dienen. Die Steuereinrichtung kann auch an einem Gleitringdichtungsgehäuse angeordnet sein. Alternativ kann die Steuereinrichtung in die Gleitringdichtung integriert ausgeführt sein.

Die Steuereinrichtung 35 wertet die Signale der Sensoren 30, 37, 38, 39 und 40 aus, ermittelt den Betriebszustand der Kreiselpumpe 4 und/oder den Betriebszustand der Gleitringdichtung 1 und leitet in Abhängigkeit dieses Betriebszustands eine Reaktion ein. Beispielsweise erkennt die Steuereinrichtung 35 einen zu hohen Differenzdruck zwischen Hoch- und Niederdruckseite der Gleitringdichtung 1 als unzulässig für die Gleitringdichtung 1 und leitet eine zusätzliche Schmierung des Dichtspalts 14 ein. Die Steuereinrichtung 35 steuert und/oder regelt dabei die Fördereinrichtung 21. Dadurch wird bei Bedarf der Schmierzustand im Dichtspalt 14 gezielt verbessert. So wird das Betriebsverhalten der Gleitringdichtung 1 optimiert und ein Trockenlaufen der Gleitringdichtung 1 ist wirksam verhindert.

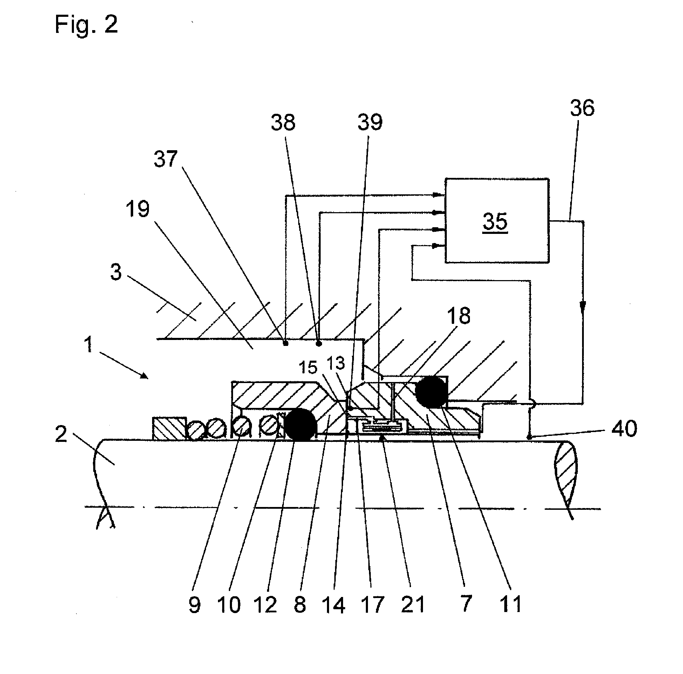

Die Figur 2 zeigt eine Gleitringdichtung 1 mit einer mikromechanischen Membranpumpe als Fördereinrichtung 21. Die Gleitringdichtung 1 besteht aus einem axial feststehenden Gleitring 7 und einem durch ein Vorspannelement 9 und einem Druckring 10 gegen den axial feststehenden Gleitring 7 gedrückten befederten rotierenden Gleitring 8. Der Gleitring 8 ist gegenüber der rotierenden Welle 2 über eine Abdichtung 12 abgedichtet. Der stationäre Gleitring 7 ist gegenüber einem Pumpengehäuse 3 über eine Abdichtung 11 abgedichtet. Der stationäre Gleitring 7 weist einen ausgangsseitigen Kanal 17 sowie einen eingangsseitigen Kanal 18 auf. Der Kanal 17 mündet an der Dichtfläche des stationären, axial feststehenden Gleitrings 7 in den Dichtspalt 14. Der Austritt des Kanals 17 liegt dabei zwischen dem radial äußersten und dem radial innersten Ende der Fläche 13 des stationären Gleitringes 7, die mit der Fläche 15 des rotierenden Gleitringes 8 zusammenwirkt. In den stationären Gleitring 7 integriert ist eine als piezoelektrische Membranpumpe ausgebildete Fördereinrichtung 21. Die Fördereinrichtung 21 ist über den Kanal 18 mit einem fluidgefüllten, druckseitigen Dichtungsraum 19 verbunden. Die Fördereinrichtung 21 ist über eine elektrische Anschlussleitung 36 mit einer Steuereinrichtung 35, die die Fördereinrichtung 21 ansteuert, verbunden. Die Versorgungsleitung 36 zur elektrischen Versorgung der Mikropumpe ist auf der drucklosen Seite der Gleitringdichtung 1 verlegt, um einen Fluidkontakt auszuschließen und eine einfachere Montage oder Wartung zu ermöglichen. Die am Gehäuse 3 der Kreiselpumpe 4 angeordnete Steuereinrichtung 35 ist mittels mehrerer Signalleitungen mit Sensoren 37, 38, 39, 40 verbunden, die entsprechend den Betriebsbedingungen der Gleitringdichtung 1 Betriebsparameter der Gleitringdichtung 1 erfassen. Dazu sind die Sensoren 37, 38, 39, 40 in oder an der Gleitringdichtung 1 angeordnet. In diesem Ausführungsbeispiel sind im Dichtungsraum 19 ein Sensor 37 für einen Förderfluiddruck und ein Sensor 38 für eine Förderfluidtemperatur vorgesehen. Weiterhin sind ein Sensor 39 für die Temperatur nahe dem Dichtspalt sowie ein Sensor 40 für die Drehzahl der Antriebswelle 2 und/oder Vibrationen der Gleitringdichtungsanordnung vorgesehen. Die Steuereinrichtung 35 kann ein oder mehrere Sensorsignale dieser Sensoren und weitere Sensorsignale verarbeiten. Die Steuereinrichtung 35 leitet in Abhängigkeit des ermittelten Betriebszustands der Gleitringdichtung 1 eine geeignete Reaktion ein. Dabei wird die piezoelektrische Mikromembranpumpe 21 gesteuert und/oder geregelt. Indem die Fördereinrichtung 21 durch die Steuereinrichtung 35 temporär aktivierbar ist, ist es möglich, in für die Gleitringdichtung 1 als ungünstig erachteten Betriebszuständen den Dichtspalt 14 zeitlich begrenzt aktiv zu schmieren und den zum Aufbau eines hydrodynamischen Schmierfilms notwendigen Leckagestrom der Gleitringdichtung 1 zu unterstützen.

Auf Grund des geringen Energieverbrauchs einer solchen Mikropumpe ist es ebenfalls vorgesehen, die elektrische Energieversorgung durch Mittel bereit zu stellen, die aus der Umgebung der Mikropumpe Energie in elektrische Energie wandeln. In Kombination mit einem Temperatursensor nahe der Dichtfläche und durch Integration einer Steuereinrichtung in einen Gleitring ist es möglich, die komplette Anordnung bestehend aus Sensorik, Mikropumpe, Steuereinrichtung in einen Gleitring, insbesondere in den stationären Gleitring, zu integrieren.

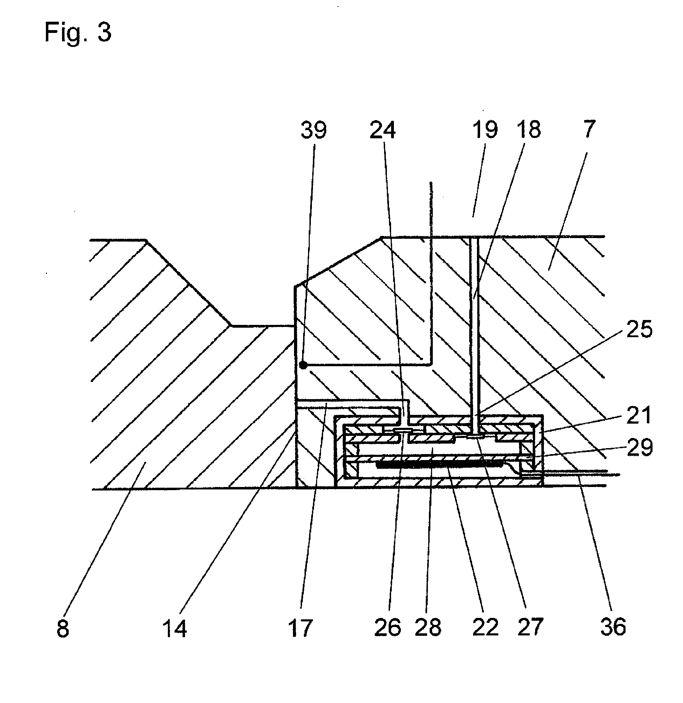

Die Figur 3 zeigt eine erfindungsgemäße Fördereinrichtung 21 in einer Detailansicht. Die Fördereinrichtung 21 besteht aus einem auf einer auslenkbar gestalteten Pumpenmembran 29 aufgebrachten piezoelektrischen Mikroaktuator 22, einer Pumpenkammer 28 und ein- und ausgangsseitigen Ventilen 27 und 26. Die Pumpenmembran 29 ist aus Silizium oder Stahl gefertigt. Die Pumpenkammer 28 ist auf der Ausgangsseite 24 der Fördereinrichtung 21 über das ausgangsseitige Ventil 26 mit dem ausgangsseitigen Kanal 17 verbunden, der in den Dichtspalt 14 mündet. Auf der Eingangsseite 25 der Fördereinrichtung 21 ist die Pumpenkammer 28 über das eingangsseitige Ventil 27 mit dem eingangsseitigen Kanal 18 verbunden. Bei den Ventilen 26, 27 handelt es sich um Sperrventile, die als mikromechanische Rückschlagklappen ausgebildet sind. Zur elektrischen Versorgung des Mikroaktuators 22 dient eine Anschlussleitung 36, die mit einer Steuereinrichtung verbunden ist.

Der als Piezoelement ausgebildete Mikroaktuator 22 verformt sich nach Anlegen einer elektrischen Spannung. Bei Wölbung beziehungsweise Durchbiegung des Aktuators 22 wird das Volumen der Pumpenkammer 28 verändert, so dass ein durch die Sperrventile 26, 27 gerichteter Schmierfluidstrom verursacht wird. Bei Durchbiegung des Aktuators 22 in Richtung der Pumpenkammer 28 wird das Fluid aus der Pumpenkammer 28 durch das Sperrventil 26 und den Kanal 17 in den Dichtspalt 14 geleitet, um dort bei Bedarf den Schmierzustand der Gleitringdichtung 1 zu verbessern. Bei Durchbiegung des Aktuators 22 in die entgegengesetzte Richtung wird das Schmierfluid aus dem druckseitigen Raum 19 durch den Kanal 18, das Sperrventil 27 in die Pumpenkammer 28 gesaugt. Dieser Vorgang kann bei Bedarf beliebig oft wiederholt oder beispielsweise bei Erfassung einer unzulässigen Leckage beendet werden. Die Pumprate der Mikrofördereinrichtung 21 kann mittels einer in einer Steuereinrichtung einstellbaren oder veränderbaren Aktuatorfrequenz und/oder der angelegten elektrischen Spannung eingestellt werden.

## Patentansprüche

1. Gleitringdichtung (1) zur Bereitstellung einer fluidgeschmierten Abdichtung zwischen einem Paar relativ verdrehbarer Bauteile, insbesondere zwischen einem stationären (3) und einem rotierenden Bauteil (2), mit einem ersten Gleitring (7), der bezüglich eines der Bauteile (3) axial feststehend und drehfest sowie abgedichtet befestigt ist, und einem zweiten Gleitring (8), der bezüglich des anderen Bauteils (2) drehfest sowie abgedichtet befestigt ist, wobei der zweite Gleitring (8) in Richtung auf den ersten Gleitring (7) axial beweglich ist, so dass einander gegenüberliegende Flächen des ersten und zweiten Gleitringes derart zusammenwirken, dass zwischen diesen ein Dichtspalt (14) ausgebildet ist, wobei in einem der Gleitringe mindestens ein Kanal (17) vorgesehen ist, wobei sich der Kanal (17) des Gleitringes innerhalb des Dichtspaltes öffnet, wobei der Kanal (17) ein Schmierfluid führt, wobei das Schmierfluid über den Kanal (17) dem Dichtspalt (14) in Abhängigkeit von überwachten Betriebsbedingungen geliefert wird, um das Betriebsverhalten der Dichtung (1) zu optimieren,
**dadurch gekennzeichnet, dass**
in die Gleitringdichtung (1) eine als Mikropumpe ausgebildete Fördereinrichtung (21) zur Förderung des Schmierfluids integriert ist, wobei eine Ausgangsseite (24) der Fördereinrichtung (21) mit dem Kanal (17) verbunden ist und eine Eingangsseite (25) der Fördereinrichtung (21) über einen weiteren Kanal (18) mit einem fluidgefüllten Raum (19) verbunden ist.

2. Gleitringdichtung nach Anspruch 1, **dadurch gekennzeichnet, dass** in einen der Gleitringe (7, 8) eine miniaturisierte Fördereinrichtung (21), insbesondere eine mikromechanische Fördereinrichtung (21), integriert ist.

3. Gleitringdichtung nach Anspruch 2, **dadurch gekennzeichnet, dass** die Fördereinrichtung (21) und die Kanäle (17, 18) in einem stationären Gleitring (7), insbesondere in einem stationären axial feststehenden Gleitring (7), vorgesehen sind.

4. Gleitringdichtung nach Anspruch 3, **dadurch gekennzeichnet, dass** die Fördereinrichtung (21) auf einer Niederdruckseite des stationären Gleitringes (7) angeordnet ist.

5. Gleitdringdichtung nach einem der Ansprüche 1 bis 4, **dadurch gekennzeichnet, dass** die Mikropumpe eine Membranpumpe oder eine peristaltische Pumpe oder eine Zahnradpumpe ist.

6. Gleitringdichtung nach einem der Ansprüche 1 bis 5, **dadurch gekennzeichnet, dass** die Fördereinrichtung (21) ein piezoelektrisches, pneumatisches oder elektromagnetisches Wirkprinzip aufweist.

7. Gleitringdichtung nach einem der Ansprüche 1 bis 5, **dadurch gekennzeichnet, dass** die Fördereinrichtung (21) ein thermopneumatisches, elektrisches, elektrostatisches, thermisches, akustisches oder optisches Wirkprinzip aufweist.

8. Gleitringdichtung nach Anspruch 5, **dadurch gekennzeichnet, dass** die Fördereinrichtung (21) eine piezoelektrische Membranpumpe ist.

9. Gleitringdichtung nach einem der Ansprüche 1 bis 8, **dadurch gekennzeichnet, dass** in der Gleitringdichtung (1) mehrere Fördereinrichtungen (21) angeordnet sind.

10. Gleitringdichtung nach Anspruche 9, **dadurch gekennzeichnet, dass** in der Gleitringdichtung (1) mehrere Kanäle (17) vorgesehen sind, die vorzugsweise in Umfangsrichtung gleichmäßig beabstandet in den Dichtspalt (14) münden.

11. Gleitringdichtung nach einem der Ansprüche 1 bis 10, **dadurch gekennzeichnet, dass** in oder an der Gleitringdichtung (1), vorzugsweise in oder nahe dem Dichtspalt (14), ein oder mehrere Sensoren (30, 37, 38, 39, 40) angeordnet sind, die Betriebsparameter erfassen.

12. Gleitringdichtung nach Anspruch 11, **dadurch gekennzeichnet, dass** eine mit den Sensoren (30, 37, 38, 39, 40) verbundene Steuereinrichtung (35) mit den Sensorsignalen den Betriebszustand der Gleitringdichtung (1) ermittelt und in Abhängigkeit des Betriebszustands der Gleitringdichtung (1) eine Reaktion einleitet, insbesondere die Fördereinrichtung (21) oder die Fördereinrichtungen (21) steuert und/oder regelt.

13. Gleitringdichtung nach einem der Ansprüche 1 bis 12, **dadurch gekennzeichnet, dass** in der Gleitringdichtung (1) Mittel zur Wandlung von Energie aus der Umgebung in elektrische Energie vorgesehen sind.

14. Gleitringdichtung nach Anspruch 13, **dadurch gekennzeichnet, dass** innerhalb der Gleitringdichtung (1) thermo-, dynamo- oder piezoelelektrische Komponenten zur Energiewandlung von thermischer Energie, Rotations- oder Vibrationsenergie in elektrische Energie vorgesehen sind.

15. Gleitringdichtung nach Anspruch 13 oder 14, **dadurch gekennzeichnet, dass** ein oder mehrere Fördereinrichtungen (21), ein oder mehrere Sensoren (30, 37, 38, 39, 40) und/oder die Steuereinrichtung (35) durch die Mittel zur Wandlung von Energie aus der Umgebung elektrisch versorgt sind.

16. Verwendung einer Gleitringdichtung nach einem der Ansprüche 1 bis 15 für eine Wellenabdichtung einer Strömungsmaschine, insbesondere einer Kreiselpumpe (4).

17. Verfahren zum Betrieb einer Gleitringdichtung nach einem der Ansprüche 1 bis 15, **dadurch gekennzeichnet, dass** ein oder mehrere in einer Umgebung der Gleitringdichtung (1), vorzugsweise in oder nahe dem Dichtspalt (14), angeordnete Sensoren (30, 37, 38, 39, 40) Betriebsparameter der Gleitringdichtung (1) erfassen.

18. Verfahren nach Anspruch 17, **dadurch gekennzeichnet, dass** eine mit dem Sensor (30, 37, 38, 39, 40) oder den Sensoren (30, 37, 38, 39, 40) verbundene Steuereinrichtung (35) den Betriebszustand der Gleitringdichtung (1) ermittelt und in Abhängigkeit des Betriebszustands der Gleitringdichtung (1) eine Reaktion einleitet.

19. Verfahren nach Anspruch 18, **dadurch gekennzeichnet, dass** die Steuereinrichtung (35) unzulässige Betriebszustände meldet und/oder ein oder mehrere Fördereinrichtungen (21) steuert und/oder regelt.

20. Verfahren nach Anspruch 18 oder 19, **dadurch gekennzeichnet, dass** die Steuereinrichtung (35) mittels voreingestellter Algorithmen oder lernend das Betriebsverhalten der Gleitringdichtung (1) optimiert.

## Claims

1. Mechanical seal (1) for providing a fluid-lubricated seal between a pair of relatively rotatable components, in particular between a stationary (3) and a rotating component (2), having a first sliding ring (7) which is fastened in an axially static and sealed manner with regard to one of the components (3) and fixedly so as to rotate with the latter, and a second sliding ring (8) which is fastened in a sealed manner with regard to the other component (2) and fixedly so as to rotate with it, the second sliding ring (8) being axially movable in the direction of the first sliding ring (7), with the result that surfaces which lie opposite one another of the first and second sliding ring interact in such a way that a sealing gap (14) is formed between them, at least one channel (17) being provided in one of the sliding rings, the channel (17) of the sliding ring opening within the sealing gap, the channel (17) conducting a lubricating fluid, the lubricating fluid being delivered via the channel (17) to the sealing gap (14) depending on monitored operating conditions, in order to optimize the operating behaviour of the seal (1), **characterized in that** a delivery device (21) which is configured as a micropump for delivering the lubricating fluid is integrated into the mechanical seal (1), an outlet side (24) of the delivery device (21) being connected to the channel (17), and an inlet side (25) of the delivery device (21) being connected via a further channel (18) to a fluid-filled space (19).

2. Mechanical seal according to Claim 1, **characterized in that** a miniaturized delivery device (21), in particular a micromechanical delivery device (21), is integrated into one of the sliding rings (7, 8).

3. Mechanical seal according to Claim 2, **characterized in that** the delivery device (21) and the channels (17, 18) are provided in a stationary sliding ring (7), in particular in a stationary axially static sliding ring (7).

4. Mechanical seal according to Claim 3, **characterized in that** the delivery device (21) is arranged on a low pressure side of the stationary sliding ring (7).

5. Mechanical seal according to one of Claims 1 to 4, **characterized in that** the micropump is a diaphragm pump or a peristaltic pump or a gear pump.

6. Mechanical seal according to one of Claims 1 to 5, **characterized in that** the delivery device (21) has a piezoelectric, pneumatic or electromagnetic operating principle.

7. Mechanical seal according to one of Claims 1 to 5, **characterized in that** the delivery device (21) has a thermopneumatic, electric, electrostatic, thermal, acoustic or optical operating principle.

8. Mechanical seal according to Claim 5, **characterized in that** the delivery device (21) is a piezoelectric diaphragm pump.

9. Mechanical seal according to one of Claims 1 to 8, **characterized in that** a plurality of delivery devices (21) are arranged in the mechanical seal (1).

10. Mechanical seal according to Claim 9, **characterized in that** a plurality of channels (17) which preferably open into the sealing gap (14) spaced apart uniformly in the circumferential direction are provided in the mechanical seal (1).

11. Mechanical seal according to one of Claims 1 to 10, **characterized in that** one or more sensors (30, 37, 38, 39, 40) which detect operating parameters are arranged in or on the mechanical seal (1), preferably in or close to the sealing gap (14).

12. Mechanical seal according to Claim 11, **characterized in that** a control device (35) which is connected to the sensors (30, 37, 38, 39, 40) determines the operating state of the mechanical seal (1) by way of the sensor signals and initiates a reaction depending on the operating state of the mechanical seal (1), in particular controls and/or adjusts the delivery device (21) or the delivery devices (21).

13. Mechanical seal according to one of Claims 1 to 12, **characterized in that** means for converting energy from the surroundings into electrical energy are provided in the mechanical seal (1).

14. Mechanical seal according to Claim 13, **characterized in that** thermoelectric, dynamoelectric or piezoelectric components for the energy conversion of thermal energy, rotational or vibrational energy into electrical energy are provided within the mechanical seal (1).

15. Mechanical seal according to Claim 13 or 14, **characterized in that** one or more delivery devices (21), one or more sensors (30, 37, 38, 39, 40) and/or the control device (35) are supplied electrically by way of the means for converting energy from the surroundings.

16. Use of a mechanical seal according to one of Claims 1 to 15 for shaft sealing of a continuous-flow machine, in particular a centrifugal pump (4).

17. Method for operating a mechanical seal according to one of Claims 1 to 15, **characterized in that** one or more sensors (30, 37, 38, 39, 40) which are arranged in the surroundings of the mechanical seal (1), preferably in or near the sealing gap (14), detect operating parameters of the mechanical seal (1).

18. Method according to Claim 17, **characterized in that** a control device (35) which is connected to the sensor (30, 37, 38, 39, 40) or the sensors (30, 37, 38, 39, 40) determines the operating state of the mechanical seal (1) and initiates a reaction depending on the operating state of the mechanical seal (1).

19. Method according to Claim 18, **characterized in that** the control device (35) reports impermissible operating states and/or controls and/or adjusts one or more delivery devices (21).

20. Method according to Claim 18 or Claim 19, **characterized in that** the control device (35) optimizes the operating behaviour of the mechanical seal (1) by means of preset algorithms or in an adaptive manner.

## Revendications

1. Joint d'étanchéité à bague glissante (1) pour fournir une étanchéité lubrifiée par fluide entre une paire de composants pouvant tourner l'un par rapport à l'autre, en particulier entre un composant stationnaire (3) et un composant rotatif (2), comprenant une première bague glissante (7) qui est fixée de manière fixe axialement par rapport à l'un des composants (3) et de manière solidaire en rotation ainsi que de manière étanchéifiée, et une deuxième bague glissante (8), qui est fixée par rapport à l'autre composant (2) de manière solidaire en rotation et de manière étanchéifiée, la deuxième bague glissante (8) étant déplaçable axialement dans la direction de la première bague glissante (7) de telle sorte que des surfaces opposées l'une à l'autre de la première et de la deuxième bague glissante coopèrent de telle sorte qu'entre celles-ci soit réalisé un interstice d'étanchéité (14), au moins un canal (17) étant prévu dans l'une des bagues glissantes, le canal (17) de la bague glissante s'ouvrant à l'intérieur de l'interstice d'étanchéité, le canal (17) conduisant un fluide de lubrification, le fluide de lubrification étant acheminé par le biais du canal (17) à l'interstice d'étanchéité (14) en fonction de conditions de fonctionnement contrôlées, afin d'optimiser le comportement fonctionnel du joint d'étanchéité (1),
**caractérisé en ce que**
dans le joint d'étanchéité à bague glissante (1) est intégré un dispositif de transport. (21) réalisé sous forme de micropompe pour transporter le fluide de lubrification, un côté de sortie (24) du dispositif de transport (21) étant connecté au canal (17) et un côté d'entrée (25) du dispositif de transport (21) étant connecté à un espace rempli de fluide (19) par le biais d'un canal supplémentaire (18).

2. Joint d'étanchéité à bague glissante selon la revendication 1, **caractérisé en ce que** dans l'une des bagues glissantes (7, 8) est intégré un dispositif de transport miniaturisé (21), notamment un dispositif de transport micromécanique (21).

3. Joint d'étanchéité à bague glissante selon la revendication 2, **caractérisé en ce que** le dispositif de transport (21) et les canaux (17, 18) sont prévus dans une bague glissante stationnaire (7), notamment dans une bague glissante (7) stationnaire fixée axialement.

4. Joint d'étanchéité à bague glissante selon la revendication 3, **caractérisé en ce que** le dispositif de transport (21) est disposé sur un côté basse pression de la bague glissante stationnaire (7).

5. Joint d'étanchéité à bague glissante selon l'une quelconque des revendications 1 à 4, **caractérisé en ce que** la micropompe est une pompe à membrane ou une pompe péristaltique ou une pompe à engrenages.

6. Joint d'étanchéité à bague glissante selon l'une quelconque des revendications 1 à 5, **caractérisé en ce que** le dispositif de transport (21) présente un principe actif piézoélectrique, pneumatique ou électromagnétique.

7. Joint d'étanchéité à bague glissante selon l'une quelconque des revendications 1 à 5, **caractérisé en ce que** le dispositif de transport (21) présente un principe actif thermopneumatique, électrique, électrostatique, thermique, acoustique ou optique.

8. Joint d'étanchéité à bague glissante selon la revendication 5, **caractérisé en ce que** le dispositif de transport (21) est une pompe à membrane piézoélectrique.

9. Joint d'étanchéité à bague glissante selon l'une quelconque des revendications 1 à 8, **caractérisé en ce que** plusieurs dispositifs de transport (21) sont disposés dans le joint d'étanchéité à bague glissante (1).

10. Joint d'étanchéité à bague glissante selon la revendication 9, **caractérisé en ce que** plusieurs canaux (17) sont prévus dans le joint d'étanchéité à bague glissante (1), lesquels débouchent dans l'interstice d'étanchéité (14) de préférence de manière espacée uniformément les uns des autres dans la direction périphérique.

11. Joint d'étanchéité à bague glissante selon l'une quelconque des revendications 1 à 10, **caractérisé en ce qu'**un ou plusieurs capteurs (30, 37, 38, 39, 40) sont disposés dans ou contre le joint d'étanchéité à bague glissante (1), de préférence dans ou à proximité de l'interstice d'étanchéité (14), lesquels détectent des paramètres de fonctionnement.

12. Joint d'étanchéité à bague glissante selon la revendication 11, **caractérisé en ce qu'**un dispositif de commande (35) connecté aux capteurs (30, 37, 38, 39, 40) détermine à l'aide des signaux de capteur l'état de fonctionnement du joint d'étanchéité à bague glissante (1) et en fonction de l'état de fonctionnement du joint d'étanchéité à bague glissante (1), amorce une réaction, notamment commande et/ou régule le dispositif de transport (21) ou les dispositifs de transport (21).

13. Joint d'étanchéité à bague glissante selon l'une quelconque des revendications 1 à 12, **caractérisé en ce que** des moyens sont prévus dans le joint d'étanchéité à bague glissante (1) pour convertir l'énergie provenant de l'environnement en énergie électrique.

14. Joint d'étanchéité à bague glissante selon la revendication 13, **caractérisé en ce qu'**à l'intérieur du joint d'étanchéité à bague glissante (1) sont prévus des composants thermoélectriques, dynamoélectriques ou piézoélectriques pour la conversion d'énergie thermique, de rotation ou de vibration en énergie électrique.

15. Joint d'étanchéité à bague glissante selon la revendication 13 ou 14, **caractérisé en ce qu'**un ou plusieurs dispositifs de transport (21), un ou plusieurs capteurs (30, 37, 38, 39, 40) et/ou le dispositif de commande (35) sont alimentés en énergie électrique par les moyens pour convertir l'énergie provenant de l'environnement.

16. Utilisation d'un joint d'étanchéité à bague glissante selon l'une quelconque des revendications 1 à 15 pour un joint d'étanchéité d'arbre d'une turbomachine, en particulier d'une pompe centrifuge (4).

17. Procédé pour faire fonctionner un joint d'étanchéité à bague glissante selon l'une quelconque des revendications 1 à 15, **caractérisé en ce qu'**un ou plusieurs capteurs (30, 37, 38, 39, 40) disposés dans un environnement du joint d'étanchéité à bague glissante (1), de préférence dans ou à proximité de l'interstice d'étanchéité (14), détectent des paramètres de fonctionnement du joint d'étanchéité à bague glissante (1).

18. Procédé selon la revendication 17, **caractérisé en ce qu'**un dispositif de commande (35) connecté au capteur (30, 37, 38, 39, 40) ou aux capteurs (30, 37, 38, 39, 40) détermine l'état de fonctionnement du joint d'étanchéité à bague glissante (1) et amorce une réaction en fonction de l'état de fonctionnement du joint d'étanchéité à bague glissante (1).

19. Procédé selon la revendication 18, **caractérisé en ce que** le dispositif de commande (35) communique des états de fonctionnement inadmissibles et/ou commande et/ou régule un ou plusieurs dispositifs de transport (21).

20. Procédé selon la revendication 18 ou 19, **caractérisé en ce que** le dispositif de commande (35) optimise, au moyen d'algorithmes préétablis, ou par apprentissage, le comportement fonctionnel du joint d'étanchéité à bague glissante (1).
